# EUROPEAN PATENT APPLICATION

(11) **EP 4 764 847 A1**
(43) Date of publication of application: **24.06.2026**
(21) Application number: 24853869.6
(22) Date of filing: 15.08.2024
(51) Int. Cl.: G06F 9/451, G06F 3/0483

(54) **CONTENT SHARING METHOD AND APPARATUS, AND CONTENT VIEWING METHOD AND APPARATUS, AND DEVICE AND STORAGE MEDIUM**

(30) Priority: 15.08.2023 CN 202311028584
(71) Applicant: Beijing Zitiao Network Technology Co., Ltd., Beijing 100190 (CN)
(72) Inventor: YANG, Jiahui, Beijing 100028 (CN); HE, Zhimiao, Beijing 100028 (CN)
(74) Representative: Grünecker Patent- und Rechtsanwälte PartG mbB
(86) International application number: PCT/CN2024/112555
(87) International publication number: WO 2025/036463

(57) **Abstract**

The embodiments of the disclosure relate to methods, apparatuses, devices and storage media for sharing content or viewing content. The method for viewing content provided herein includes: receiving a content viewing request; and presenting a content interface associated with a target user, the content interface presenting work content generated based on a sharing request by the target user for a selected set of messages in a message presentation interface.

## Description

This application claims the priority to Chinese Patent Application No. 202311028584.9, filed on Aug. 15, 2023 and entitled "METHOD, APPARATUS, DEVICE AND STORAGE MEDIUM FOR SHARING OR VIEWING CONTENT", the entirety of which is incorporated herein by reference.

### FIELD

The example embodiments of the disclosure generally relate to the field of computers, and in particular, to methods, apparatuses, devices, and computer-readable storage media for sharing or viewing content.

### BACKGROUND

With the development of computer technologies, the Internet has become an important platform for information interaction. For example, people may actively post contents or obtain contents created by other users, and may perform interactions such as reposting, commenting, and the like on the contents.

### SUMMARY

In the first aspect of the disclosure, a method for viewing content is provided. The method comprises: receiving a content viewing request; and presenting a content interface associated with a target user, the content interface presenting work content generated based on a sharing request by the target user for a selected set of messages in a message presentation interface.

In the second aspect of the disclosure, a method for sharing content is provided. The method comprises: receiving a selection of a set of messages in a message presentation interface by a target user; and posting, based on a sharing request for the selected set of messages, work content generated based on the set of messages, causing the work content to be presented in a content interface associated with the target user.

In the third aspect of the disclosure, an apparatus for viewing content is provided. The apparatus comprises: a request receiving module configured to receive a content viewing request; and an interface presentation module configured to present a content interface associated with a target user, the content interface presenting work content generated based on a sharing request by the target user for a selected set of messages in a message presentation interface.

In the fourth aspect of the disclosure, an apparatus for sharing content is provided. The apparatus comprises: a selection receiving module configured to receive a selection of a set of messages in a message presentation interface by a target user; and a content posting module configured to post, according to a sharing request for the selected set of messages, work content generated based on the set of messages, causing the work content to be presented in a content interface associated with the target user.

In the fifth aspect of this disclosure, an electronic device is provided. The electronic device comprises: at least one processing unit; and at least one memory coupled to the at least one processing unit and storing instructions for execution by the at least one processing unit, the instructions, when executed by the at least one processing unit, causing the electronic device to perform the method of the first or second aspect.

In the sixth aspect of this disclosure, a computer-readable storage medium is provided. The computer-readable storage medium has stored thereon a computer program executable by a processor to implement the method of the method of the first or second aspect.

It should be understood that the content described in this section is not intended to limit the key features or important features of the embodiments of the disclosure, nor is it intended to limit the scope of the disclosure. Other features of the disclosure will become readily understood from the following description.

### BRIEF DESCRIPTION OF DRAWINGS

The above and other features, advantages, and aspects of various embodiments of the disclosure will become more apparent from the following detailed description taken in conjunction with the drawings. In the drawings, the same or similar reference numbers refer to the same or similar elements, wherein:
FIG. 1 illustrates a schematic diagram of an example environment in which embodiments according to the disclosure may be implemented;
FIGS. 2A-2C illustrate example interfaces in accordance with some embodiments of the disclosure;
FIGS. 3A and 3B illustrate example interfaces according to other embodiments of the disclosure;
FIGS. 4A-4C illustrate example interfaces according to other embodiments of the disclosure;
FIG. 5 illustrates an example interface according to still other embodiments of the disclosure;
FIG. 6 shows a flowchart of an example process for viewing content according to some embodiments of the disclosure;
FIG. 7 illustrates a flowchart of an example process for sharing content according to some embodiments of the disclosure;
FIG. 8 shows a schematic structural block diagram of an apparatus for viewing content according to some embodiments of the disclosure;
FIG. 9 illustrates a schematic structural block diagram of an apparatus for sharing content according to some embodiments of the disclosure; and
FIG. 10 illustrates a block diagram of an electronic device capable of implementing various embodiments of the disclosure.

### DETAILED DESCRIPTION

The embodiments of the disclosure will be described in more detail below with reference to the accompanying drawings. While certain embodiments of the disclosure are shown in the accompanying drawings, it should be understood that the disclosure may be implemented in various forms, and should not be construed as limited to the embodiments set forth herein. Rather, these embodiments are provided for a more thorough and complete understanding of the disclosure. It should be understood that the drawings and embodiments of the disclosure are for illustrative purposes only and are not intended to limit the scope of the disclosure.

It should be noted that the title of any section/subsection provided herein is not limiting. Various embodiments are described throughout and any type of embodiments may be included in any section/subsection. Furthermore, the embodiments described in any section/subsection may be combined in any manner with any other embodiment described in the same section/subsection and/or different sections/subsections.

In the description of the embodiments of the disclosure, the terms "comprise" and its variants are to be read as open terms that mean "include, but is not limited to." The term "based on" is to be read as "based at least in part on." The term "one embodiment" or "the embodiment" is to be read as "at least one embodiment". The term "some embodiments" is to be read as "at least some embodiments". Other definitions, explicit and implicit, might be included below. The terms "first," "second," and the like may refer to different or identical objects. Other explicit and implicit definitions may also be included below.

The embodiments of the disclosure may relate to data of a user, acquisition and/or use of data, and the like, which should follow the corresponding laws and regulations and related regulations. In the embodiments of the disclosure, all data is collected, obtained, processed, handled, forwarded, used, and the like on the premise that the user knows and confirms. Accordingly, when the embodiments of the disclosure are implemented, users should be informed of the type, the scope of use, the use scenario, etc. of the data or information involved in an appropriate manner in accordance with relevant laws and regulations, and the user's authorization should be obtained. The specific notification and/or authorization manner may vary according to actual situations and application scenarios, and the scope of the disclosure is not limited in this respect.

If personal information processing is involved in the solutions of the specification and the embodiments, the processing is performed on the premise of having a legality basis (for example, obtaining consent of a personal information subject, or necessary for performing a fulfillment contract), and processing only within a specified or agreed range. The user's refusal to process personal information other than the necessary information required for the basic function will not affect the user's use of the basic function.

The message interaction is an important interaction behavior on the Internet. For example, people may create a chat through an instant messaging service, and implement message sending and receiving. As another example, people may also implement the delivery of messages through, for example, a message or comment system.

For users, in some scenarios, there is a need to interactively share such messages to other users. However, conventional message sharing typically relies on message reposting functionality of instant messaging services, which greatly limits the objects and approaches to message sharing.

The embodiments of the disclosure provide a solution for viewing content and sharing content. According to the content sharing solution, a selection of a set of messages in a message presentation interface by a target user may be received. Further, based on a sharing request for the selected set of messages, work content generated based on the set of messages may be posted, causing the work content to be presented in a content interface associated with the target user. According to content viewing solution, a content viewing request may be received. Further, a content interface associated with a target user may be presented, wherein the content interface presents work content generated based on a sharing request by the target user for a selected set of messages in a message presentation interface.

In this way, according to the embodiments of the disclosure, the user can convert a message into work content for posting and sharing, thereby improving efficiency of user message sharing. In addition, the message sharing way may be enriched.

Various example implementations of this solution are described in detail below in conjunction with the accompanying drawings.

### Example Environment

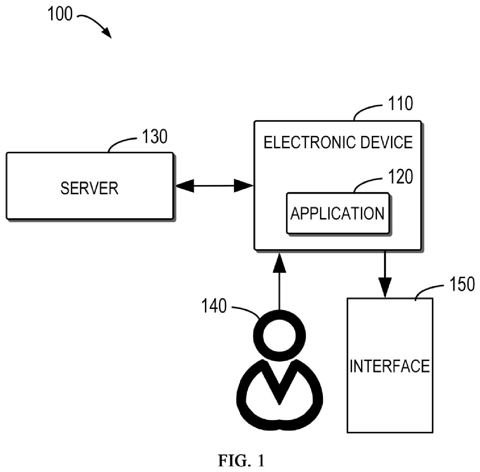

FIG. 1 illustrates a schematic diagram of an example environment 100 in which embodiments of the disclosure can be implemented. As shown in FIG. 1, the example environment 100 may include an electronic device 110.

In this example environment 100, the electronic device 110 may run an application 120 that supports interface interaction. The application 120 may be any suitable type of application for interface interaction, examples of which may include, but are not limited to, instant messaging applications, video applications, social applications, or other applications that provide services for chatting with particular objects. The user 140 may interact with the application 120 via the electronic device 110 and/or its attachment device.

In the environment 100 of FIG. 1, if the application 120 is active, the electronic device 110 may present, via the application 120, an interface 150 for supporting interface interaction.

In some embodiments, the electronic device 110 communicates with the server 130 to enable provisioning of services to the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the electronic device 110 can also support any type of interface for a user (such as a "wearable" circuit and the like).

The server 130 may be a standalone physical server, a server cluster composed of multiple physical servers, or a distributed system, or may be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms. The server 130 may include for example a computing system/server, such as a mainframe, an edge computing node, a computing device in a cloud environment, or the like. The server 130 may provide background services for applications 120 that support virtual scenes in the electronic device 110.

A communication connection may be established between the server 130 and the electronic device 110. The communication connection may be established in a wired manner or a wireless manner. The communication connection may include, but is not limited to, a Bluetooth connection, a mobile network connection, a Universal Serial Bus (USB) connection, a Wireless Fidelity (WiFi) connection, and the like, and the embodiments of the disclosure are not limited in this aspect. In an embodiment of the disclosure, the server 130 and the electronic device 110 may implement signaling interaction through a communication connection therebetween.

It should be understood that the structures and functions of the various elements in the environment 100 are described for illustrative purposes only and do not imply any limitation to the scope of the disclosure.

Some example embodiments of the disclosure will be described below with continued reference to the accompanying drawings.

### Example Interface Interaction

The process for sharing content and viewing content according to an embodiment of the disclosure will be described below with reference to the accompanying drawings.

### Example Content Sharing

According to an embodiment of the disclosure, a user may select a set of messages in a message presentation interface, and may correspondingly post work content generated based on a set of messages.

In some embodiments, such a message presentation interface may include, for example, a chat interface for presenting messages in a chat. Such chats may include, but are not limited to: a single chat, a group chat, a public channel chat in a live streaming room, a private channel chat in a live streaming room, and so on.

In some embodiments, such a message presentation interface may also comprise an interface for presenting other types of messages. As discussed above, such messages may also include, for example, messages of the type such as posts, messages, comments, and the like. Correspondingly, such a message presentation interface may include, for example, a comment interface, a message panel, a follow-on viewing interface, and the like of the media content.

For ease of description, the solution of the disclosure will be described below by using a chat interface as an example of a message presentation interface. It should be understood that the described characteristics or combinations of characteristics in the following solutions may be applied to other types of message presentation interfaces without explicit contrary teaching.

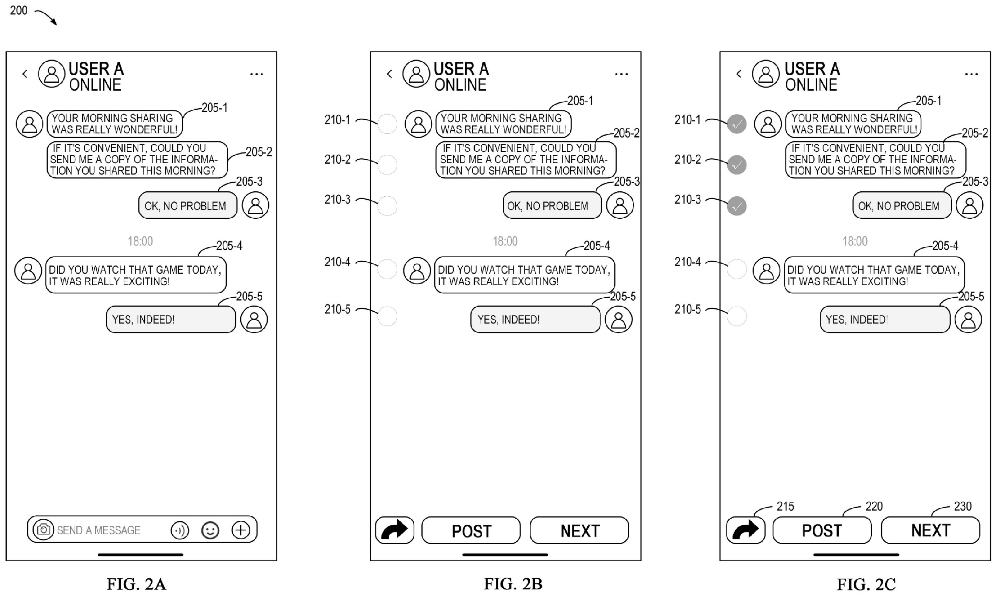

FIG. 2A illustrates an example interface in accordance with some embodiments of the disclosure. As shown in FIG. 2A, the interface 200 may be a chat interface between a current user (e.g., "User B") and "User A". The interface 200 may be presented by the electronic device 110 corresponding to "User B".

As shown in FIG. 2A, the interface 200 may display multiple messages in a chat, e.g., messages 205-1 through 205-5 (individually or collectively as message 205). It should be understood that the interface 200 may also present more messages (e.g., historical messages) based on the user's operations (e.g., a sliding operation).

In some embodiments, the electronic device 110 may perform a message selection state based on a preset operation of the user. Taking FIG. 2B as an example, the electronic device 110 may enter the message selection state, for example, after receiving a long-press operation of the user on any message 205.

In the message selection state, the electronic device 110 may, for example, be associated with the displayed messages 205-1 to 205-5 to present corresponding selection controls 210-1 to 210-5 (individually or collectively as selection control 210).

Accordingly, the user may determine whether the corresponding message 205 is selected, for example, by interacting with the selection control 210.

In some embodiments, such a plurality of messages 205 may be associated with a plurality of participants of a chat. It should be understood that participants of a chat may include any suitable object, such as a user, organization, group, or virtual object. It should be understood that such an object may be associated with an entity user or may be associated with a virtual user.

In some embodiments, the plurality of messages 205 in the chat may also correspond to at least one round of dialogue of the set of participants. In some embodiments, the round of the dialogue may be determined, for example, according to the time and/or topic of the message in the chat.

Taking an inquiry dialogue as an example, one participant of a chat may, for example, provide an inquiry message. Accordingly, the other participant may provide one or more reply messages for the inquiry message. Such inquiry messages and corresponding reply messages may accordingly be determined to be associated with the same round of dialogue.

Taking FIG. 2B as an example, it may be determined that messages 205-1 to 205-3 correspond to a first round of dialogue, and messages 205-4 to 205-5 correspond to a second round of dialogue.

In some embodiments, the electronic device 110 may assist the user in selecting the message to be shared, for example, according to the dialogue. Taking FIG. 2B as an example, if the user selects message 205-2 through selection control 210-2, electronic device 110 may determine one or more messages associated with message 205-2 accordingly, and may cause the associated message(s) to be automatically selected.

In some embodiments, such an associated message may be a message in the same round of dialogue as the selected message 205-2. Specifically, the electronic device 110 may determine a target round of dialogue corresponding to the selected message 205-2, and may further determine other messages (for example, the message 205-1 and the message 205-3) in the target round of dialogue as at least one message associated with the target message in the plurality of messages.

Additionally, the electronic device 110 may, for example, cause such at least one association message to be automatically selected. As shown in FIG. 2C, for example, in the case where the user selects the selection control 210-2, the selection control 210-1 and the selection control 210-3 may also be automatically selected. Therefore, the embodiment of the disclosure can improve the efficiency of user for selecting message, and can ensure the continuity and effectiveness of the message content.

In some embodiments, if the user wants to deselect a particular message, the electronic device 110 may automatically cancel all the messages in the target dialogue round corresponding to the particular message. Continuing with FIG. 2C as an example, if the user wants to deselect the message 205-2, the electronic device 110 may further automatically deselect the message 205-1 and message 205-3, for example.

In this way, the embodiments of the disclosure cause the message selected by a user to include a complete message under a particular dialogue round, avoiding omission of message content.

In some embodiments, the electronic device 110 may further ensure that a set of messages selected by the user are always time-continuous messages in the plurality of messages. For example, with FIG. 2B as an example, if the user selects message 205-2 and attempts to re-select message 205-5, electronic device 110 may place message 205-3 and message 205-4 in the selected state based on the temporal continuity.

In this way, the embodiments of the disclosure can ensure that the plurality of messages shared by a user are time-continuous, thereby avoiding a misinterpretation of content caused by a combination of some time-discontinuous messages.

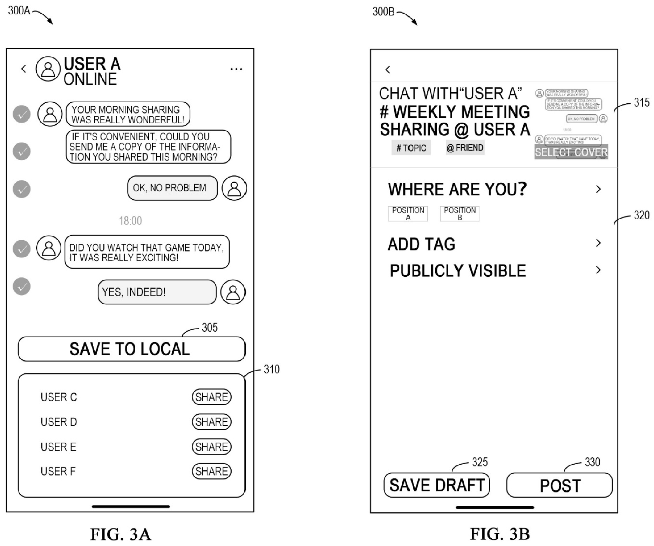

Further, as shown in FIG. 2C, the electronic device 110 may further display a reposting control 215. Upon receiving the selection of the reposting control 215, the electronic device 110 may for example present the interface 300A as shown in FIG. 3A. As shown in FIG. 3A, the electronic device 110 may display a download control 305. Upon receiving the download request from the user for the selected set of messages, the electronic device 110 may obtain the media file corresponding to the selected set of messages.

For example, when the user clicks the download control 305, the electronic device 110 may download a video file or a picture file corresponding to the selected message (e.g., the selected message shown in FIG. 3A).

In some embodiments, such video files may be used, for example, to display the selected set of messages in a predetermined order. For example, when the number of messages is large, the video file may display different parts of the set of messages in chronological order.

As another example, such multiple messages may further be converted to corresponding picture files. Similar to the process of screen capture, the electronic device 110 may obtain, for example, a picture file generated by server 130. The size of such a picture file may for example be determined based on the number of selected messages. Additionally, such a picture file may also have a preset picture style (for example, background, border, etc.).

In some embodiments, the electronic device 110 may further provide a sharing component 310, which may be used to share the selected message to one or more other users. For example, where the set of messages is selected to be shared with "User C", the electronic device 110 may send the selected set of messages as an aggregated message to the chat between the current user (i.e., User B) and the selected user (i.e., User C). Alternatively, the electronic device 110 may further send the media file corresponding to the set of messages to the chat between the current user (i.e., user B) and the selected user (i.e., user C).

With continued reference to FIG. 2C, the electronic device 110 may further provide a posting entry 220. Upon receiving a selection of the posting entry 220, the electronic device 110 may determine a sharing request of the user, and may cause the work content corresponding to the selected set of messages to be posted. For example, the posted work content may comprise audio generated by converting a message of one or more sets of messages into speech. In some scenarios, the posting entry 220 may also be referred to as a quick posting entry, that is, the user may quickly post the work content without adding the description information of the work content.

Additionally, the electronic device 110 may provide an editing entry 230. Upon receiving a selection of the editing entry 230, the electronic device 110 may present the interface 300B as shown in FIG. 3B. As shown in FIG. 3B, the electronic device 110 may further receive configuration information about the work to be posted by the user. For example, the user may also select to convert a message of one or more sets of messages into speech as audio of the work content.

Specifically, the electronic device 110 may receive, via the interface 300B, an input by a user regarding a theme (e.g., name) of the work to be posted. In some embodiments, the electronic device 110 may provide the candidate name based on one or more selected sets of messages. For example, the predetermined character in the first message to be shared may be determined as the candidate name. Such a candidate name may be presented, for example, in the editing area 315. Similar to the posting process of other work content, the electronic device 110 may also receive the input by a user regarding "topic" or "mentioned user".

Additionally, as shown in FIG. 3B, in the editing area 315, the electronic device 110 may also display a cover of work content to be posted, for example. Further, the user may further replace the work cover to be applied by clicking the cover.

Where the posted work is a video work, the cover of such work may include, for example, one image frame in the video work. Where the posted work is a picture work (e.g., graph set), the cover of such work may include a particular picture in the graph set.

In addition, the interface 300B may also include a settings area 320 for receiving one or more setting information associated with the work content. Such setting information may include, for example, address information, tag information, permission information, and the like.

As shown in FIG. 3B, the electronic device 110 may further display a save control 325 for saving the work to be posted as a draft. In addition, the electronic device 110 further displays a post control 330 for posting the work content generated based on the selected set of messages. Such work content may, for example, be posted into the content associated with the current user (i.e., "User B") as the user's work.

In some embodiments, the work content generated based on the set of messages may have an appropriate media type, such as video work content, picture work content, or content carried with a message control. For convenience of description, the specific style of the work content and the corresponding generation process will be described below in connection with the content viewing interface.

In this way, the embodiments of the disclosure can support automatically posting the selected message as the work content, thereby improving the sharing efficiency of the message content.

### Example Content Viewing

According to an embodiment of the disclosure, after the user (e.g., "User B") posts the work content generated based on the message, the appropriate user (including but not limited to "User B") may access the content interface associated with "User B" to view the posted work content.

It should be understood that such an appropriate user may be related to the permission information of the work content. For example, where the work content is publicly visible, any suitable user may have permission to view the work content. When the work content is visible by a friend, only the friends of "user B" have permission to view the work content. When the work content is visible by itself, only "user B" has permission to view the work content.

For ease of description, below is an example where the first user is considered as the viewer for viewing the work content. The first user may, for example, initiate a content viewing request through its corresponding electronic device 110. The electronic device 110 may accordingly present a content interface associated with the target user (i.e., "User B" discussed above).

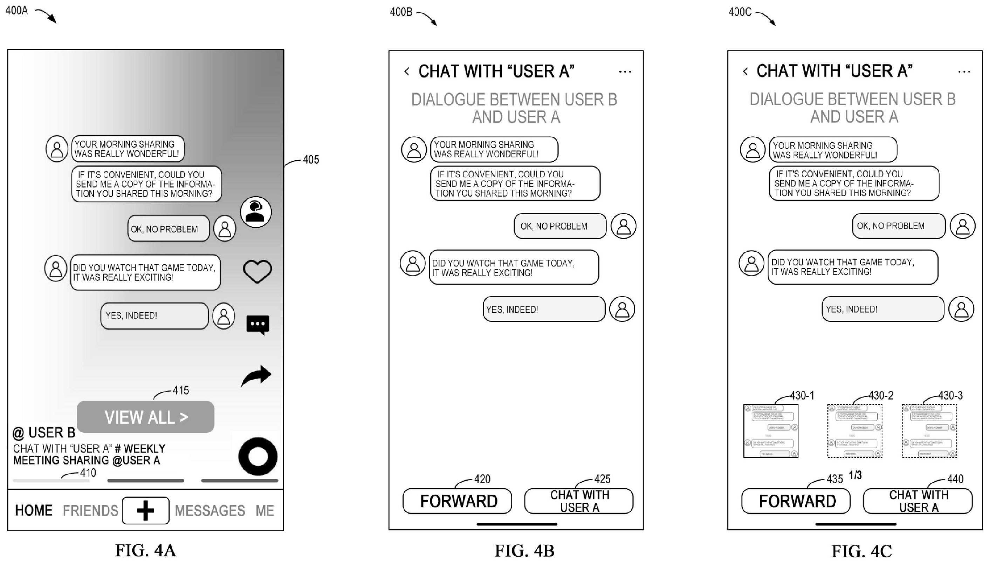

FIG. 4A illustrates an example content interface 400A in accordance with some embodiments of the disclosure. As shown in FIG. 4A, the content interface 400A may be presented, for example, by the electronic device 110 corresponding to the first user.

As shown in FIG. 4A, the electronic device 110 may display the work content 405 posted by "User B" in the content interface 400A. Such work content 405 may comprise a picture work, which may include, for example, one or more pictures.

Taking FIG. 4A as an example, the work content 405 is a graph set including three pictures. The interface 400A may include an indicator 410 corresponding to three pictures to indicate which picture in the graph set is currently presented. It may be understood that the picture may be switched by a sliding on the content interface or a triggering on the indicator 410.

In some embodiments, in the process of generating the corresponding picture work based on the set of messages selected by the user, the generating device (for example, the electronic device 110 or the server 130) may determine whether to generate a picture or a plurality of pictures based on the content of the selected set of messages and the preset picture size.

For example, where the message content is few, the generating device may convert it into a single picture. In contrast, in a case where the message content is relatively large, the generating device may determine, based on a preset style requirement (for example, a font size, a spacing, etc.), that a plurality of pictures need to be generated.

In some embodiments, in the process of generating the picture content, it may be determined whether to split the set of messages into a plurality of parts based on the display information of the electronic device 110 of "User B", and generate a plurality of pictures based on the plurality of parts.

For example, the size of each picture to be generated may be determined based on the resolution or scale of the electronic device 110 of "User B". If the content of the selected set of messages exceeds the range that a single picture can carry, the set of messages may be appropriately split to be carried by the multiple pictures.

In some embodiments, in the process of generating the corresponding picture work based on a set of messages selected by the user, the generation device (for example, the electronic device 110 or the server 130) may also always generate a single picture.

Such a single picture may, for example, carry the entire content of the selected set of messages. For example, where the message content is more, such a picture may have a greater length, for example. Alternatively, such a single picture may also carry only a predetermined portion of the set of messages, for example. This enables the user to view all the set of messages only if a preset operation is performed for the work content.

For example, taking FIG. 4A as an example, the electronic device 110 may provide a viewing entry 415 for display the entire content of the set of messages corresponding to the work content 405.

In one example, in the case that the user clicks the viewing entry 415, the electronic device 110 may, for example, present message interface 400B of FIG. 4B. As shown in FIG. 4B, in the interface 400B, the electronic device 110 may present the set of messages corresponding to the work content 405 based on the target style. Such a target style may be different from the style presented by the set of messages in the work content. For example, the target style may only presents a style of a message built in the work and hide the work interaction control of occlusion message. For example, the user may also view other messages that are not displayed in the set of messages through the message display area in interface 400B.

It should be understood that the interaction of messages provided in the target style in such an interface 400B may, for example, be similar to the interaction process for user viewing chat records. This allows the user to more conveniently view all messages corresponding to the work content 405 in a manner similar to viewing the personal chat records.

Additionally, as shown in FIG. 4B, the electronic device 110 may further provide a sharing entry 420. Upon receiving the selection of the sharing entry 420, the electronic device 110 posts another work content associated with the current user. For example, if the current user is "User C", the selection of the sharing entry 420 may trigger the posting of another work content associated with "User C", such another work content may be a reposted work generated based on the work content 405.

In some embodiments, as shown in FIG. 4B, the electronic device 110 may further provide a chat entry 425. In some embodiments, such a chat entry 425 may be used to enable a chat between the current user and a particular user. Such a particular user may be determined based on the set of messages corresponding to the work content 405.

Taking a chat scenario as an example, the particular user may be a participant of the shared chat. Taking FIG. 4B as an example, in a case where participants of a chat include "User A" and "User B", the chat entry 425 may enable a chat with "User A".

In some embodiments, for example, the participant corresponding to the chat entry 425 may not be the poster of the work content 405. In some embodiments, the chat entry 425 may correspond to a particular type of participant in the chat, such as a virtual object.

In some embodiments, the electronic device 110 may present the chat entry 425 only if it is determined that the current user has a chat permission with the participant. For example, in a case where "User A" indicates that only a friend can initiate a chat, the electronic device 110 displays the chat entry 425 only if it is determined that the current user is a friend user of "User A".

It should be appreciated that such a sharing entry 420 and/or chat entry 425 may also be displayed directly in the viewing interface 400A of the work content, for example.

As another example, upon receiving a selection of viewing entry 415, the electronic device 110 may also present interface 400C as shown in FIG. 4C. As shown in FIG. 4C, unlike the interface 400B, in the interface 400C, the electronic device 110 may provide, for example, preview image 430-1 to 430-3 of the plurality of pictures in the graph set work. The user may view different portions of the set of messages, for example, by clicking or sliding on different preview images.

Similar to FIG. 4B, the electronic device 110 may further provide a sharing entry 435 and a chat entry 440 in the interface 400C, and the interaction logic of which may be similar to that of the sharing entry 420 and the chat entry 425 discussed with reference to FIG. 4B, and details are not described herein again.

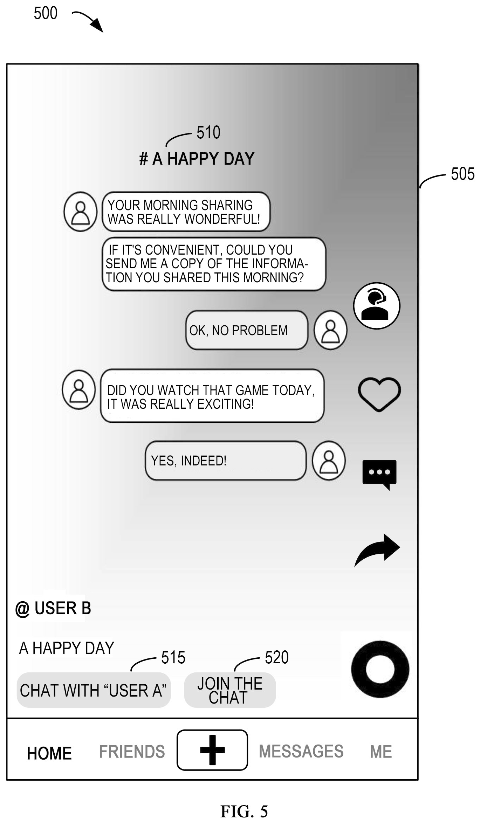

In some embodiments, the electronic device 110 may also present a content interface 500 as shown in FIG. 5. Unlike the content interface 400A shown in FIG. 4A, the content interface 500 may correspond to, for example, a playing interface of the work content 505. Such work content 505 may include, for example, a video work that may be configured to present a set of messages corresponding to the video work 505 in a predetermined order. For example, during the playing process of the video work, the electronic device 110 may sequentially present the corresponding parts of the set of messages according to the chronological order of the messages.

In some embodiments, such work content 505 may also display the theme of the set of messages corresponding to work content 505. For example, such a theme may be indicated by the poster through a sharing process. For example, the poster may enter the theme by referencing the editing area 315 discussed with reference to FIG. 3B.

Further, similar to that discussed with reference to FIGS. 4B-4C, the electronic device 110 may also provide a chat entry 515 in the interface 500. Such a chat entry 515 may be used to enable a chat between the current user and a particular user. Such a particular user may be determined based on the set of messages corresponding to the work content 505.

Using a chat scenario as an example, the particular user may be a participant of the shared chat. Taking FIG. 5B as an example, in a case where participants of a chat include "User A" and "User B", the chat entry 515 may enable a chat with "User A".

In some embodiments, for example, the participant corresponding to the chat entry 155 may not be the poster of the work content 505. In some embodiments, the chat entry 515 may correspond to a particular type of participant in the chat, such as a virtual object.

In some embodiments, the electronic device 110 may present the chat entry 515 only if it is determined that the current user has a chat permission with the participant. For example, in a case where "User A" indicates that only a friend can initiate a chat, the electronic device 110 displays the chat entry 515 only if it is determined that the current user is a friend user of "User A".

In some embodiments, the electronic device 110 may further provide a chat entry 520 for joining to a chat corresponding to the set of messages. Taking FIG. 5 as an example, the work content may correspond to a chat of "User A" and "User B". After receiving the selection of the chat entry 520 by "User C", the electronic device 110 may join "User C" to the chat of "User A" and "User B".

It should be understood that such a chat entry 520 may similarly be displayed in interface 400A, interface 400B, and/or interface 400C discussed above.

In some embodiments, the electronic device 110 may also provide a message control in the content interface 500 for presenting the work content 505. The message control may be considered as a presentation container of the work content message, and is configured to provide an interaction manner similar to the chat interface in the content interface. Such a message control may display a set of messages corresponding to the work content, and may switch the portions of messages displayed in the message control based on the received preset operation, or play the voice in the message content through the message control of the content interface 500.

For example, the user may display other messages that are not displayed within the current message control by sliding on the message control. Such an interaction process may, for example, be similar to the interaction of the message presentation area described with reference to FIGS. 4B.

In some embodiments, considering that the content interface 500 has preset sliding interaction logic, for example, the user may switch the work content presented in the content interface 500 by sliding up and down. To avoid a conflict between the sliding interaction of the message control and the sliding interaction of the content interface 500, the electronic device 110 may set the first interaction area for the message control, so that the first sliding operation corresponding to the first interaction area may be used to control the display of the message in the message control. Further, the electronic device 110 may further set a second interaction area for the content interface 500, so that the second sliding operation corresponding to the second interaction area may be used to switch the work content presented in the content interface 500.

Based on the manner, the embodiments of the disclosure can effectively consume the work content posted by the poster, and improves the efficiency of obtaining the message content.

### Example Processes

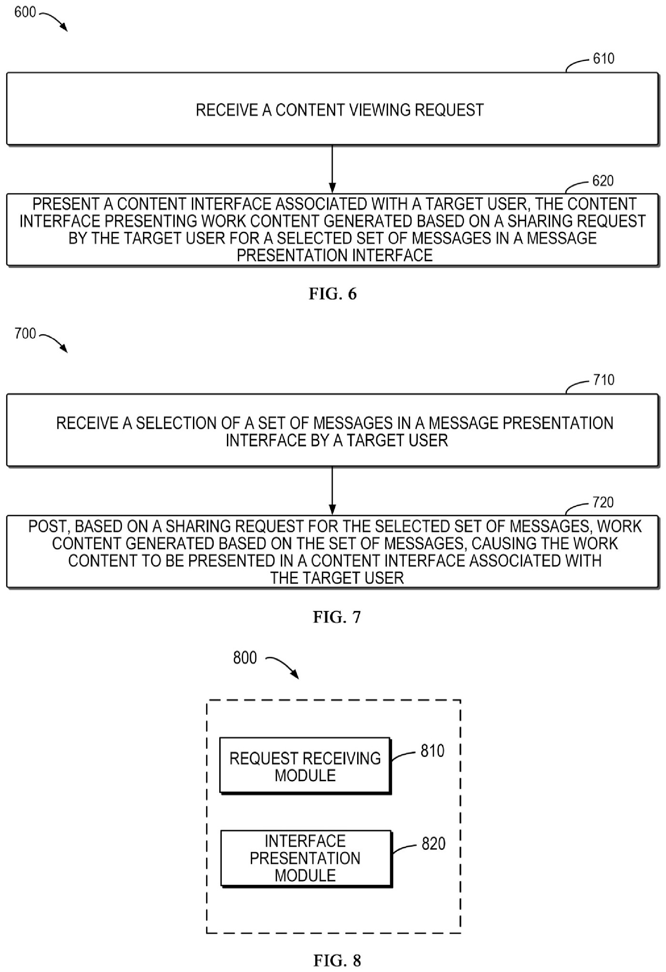

FIG. 6 illustrates a flowchart of an example process 600 for viewing content in accordance with some embodiments of the disclosure. The process 600 may be implemented at the electronic device 110 (e.g., a terminal device used by a viewer of a work). The process 600 is described below with reference to FIG. 1.

As shown in FIG. 6, at block 610, the electronic device 110 receives a content viewing request.

At block 620, the electronic device 110 presents a content interface associated with a target user, wherein the content interface presents work content generated based on a sharing request by the target user for a selected set of messages in a message presentation interface.

In some embodiments, the work content comprises a picture work generated based on the selected set of messages, and the picture work comprises at least one picture.

In some embodiments, the picture work comprises a plurality of pictures, and the plurality of pictures correspond to different portions of the set of messages.

In some embodiments, the set of messages is split into a plurality of portions based on display information of a first terminal device associated with the target user for generating the plurality of pictures corresponding to the plurality of portions.

In some embodiments, the work content comprises a single picture for presenting a predetermined portion of the set of messages.

In some embodiments, the work content comprises a video work generated based on the selected set of messages, the video work is configured to present the set of messages in a predetermined order.

In some embodiments, the work content is presented through a message control in the content interface, the message control is configured to present different portions of the set of messages based on a received predetermined operation.

In some embodiments, the predetermined operation comprises a first sliding operation corresponding to a first interaction area in the content interface, the content interface further comprises a second interaction area, and a second sliding operation corresponding to the second interaction area is configured to switch work content presented in the content interface.

In some embodiments, the content interface further comprises a viewing entry, and the process 600 further comprises: presenting, based on a selection of the viewing entry, a message interface for presenting the set of messages in a target style.

In some embodiments, the message presentation interface comprises a chat interface for presenting a message in a chat, and the process 600 further comprises: displaying a chat entry of a first object in the content interface and/or the message interface, the first object being a participant of the chat.

In some embodiments, displaying the chat entry of the first object in the content interface and/or the message interface comprises: displaying the chat entry of the first object in the content interface or the message interface in response to the current user having a chat permission with the first object.

In some embodiments, the process 600 further comprising: displaying a chat entry for joining to the chat in the content interface and/or the message interface.

In some embodiments, the work content is first work content, and the process 600 further comprises: displaying, in the content interface and/or the message interface, a sharing entry for posting second work content associated with the current user.

FIG. 7 illustrates a flowchart of an example process 700 for sharing content according to some embodiments of the disclosure. The process 700 may be implemented at electronic device 110 (e.g., a terminal device used by a poster of a work). The process 700 is described below with reference to FIG. 1. It should be understood that the electronic device used to perform process 600 and that used to perform process 700 may be the same or different electronic devices.

As shown in FIG. 7, at block 710, the electronic device 110 receives a selection of a set of messages in a message presentation interface by a target user.

At block 720, the electronic device 110 posts, based on a sharing request for the selected set of messages, work content generated based on the set of messages, causing the work content to be presented in a content interface associated with the target user.

In some embodiments, the message presentation interface comprises a chat interface for presenting a message in a chat, and receiving the selection of the set of messages in the message presentation interface by the target user comprises: presenting the chat interface, the chat interface comprising a plurality of messages corresponding to a set of participants of the chat, the plurality of messages corresponding to at least one round of dialogue of the set of participants; and receiving the selection of the set of messages from the plurality of messages by the target user.

In some embodiments, receiving the selection of the set of messages from the plurality of messages by the target user comprises: receiving a selection of a target message from the plurality of messages by the target user; determining at least one message associated with the target message from the plurality of messages; and causing the at least one message to be automatically selected as a message in the set of messages.

In some embodiments, determining at least one message associated with the target message from the plurality of messages comprises: determining a target round dialogue corresponding to the target message; and determining a further message in the target round dialogue as at least one message associated with the target message from the plurality of messages.

In some embodiments, the selected set of messages is a time-continuous message of the plurality of messages.

In some embodiments, the process 700 further comprising: based on a download request for the selected set of messages; and obtaining a media file corresponding to the set of messages, the media file comprising a picture file or a video file generated based on the set of messages.

### Example Apparatus and Device

The embodiments of the disclosure also provide a corresponding apparatus for implementing the above method or process. FIG. 8 shows a schematic structural block diagram of an apparatus 800 for viewing content according to some embodiments of the disclosure. The apparatus 800 may be implemented or included in the electronic device 110. The various modules/components in the apparatus 800 may be implemented by hardware, software, firmware, or any combination thereof.

As shown in FIG. 8, the apparatus 800 comprises a request receiving module 810 configured to receive a content viewing request, and an interface presentation module 820 configured to present a content interface associated with a target user, wherein the content interface presents work content generated based on a sharing request by the target user for a selected set of messages in a message presentation interface.

In some embodiments, the work content comprises a picture work generated based on the selected set of messages, and the picture work comprises at least one picture.

In some embodiments, the picture work comprises a plurality of pictures, and the plurality of pictures correspond to different portions of the set of messages.

In some embodiments, the set of messages is split into a plurality of portions based on display information of a first terminal device associated with the target user for generating the plurality of pictures corresponding to the plurality of portions.

In some embodiments, the work content comprises a single picture for presenting a predetermined portion of the set of messages.

In some embodiments, the work content comprises a video work generated based on the selected set of messages, the video work is configured to present the set of messages in a predetermined order.

In some embodiments, the work content is presented through a message control in the content interface, the message control is configured to present different portions of the set of messages based on a received predetermined operation.

In some embodiments, the predetermined operation comprises a first sliding operation corresponding to a first interaction area in the content interface, the content interface further comprises a second interaction area, and a second sliding operation corresponding to the second interaction area is configured to switch work content presented in the content interface.

In some embodiments, the content interface further comprises a viewing entry, and the interface presentation module 820 is further configured to: present, based on a selection of the viewing entry, a message interface for presenting the set of messages in a target style.

In some embodiments, the message presentation interface comprises a chat interface for presenting a message in a chat, and the interface presentation module 820 is further configured to: display a chat entry of a first object in the content interface and/or the message interface, the first object being a participant of the chat.

In some embodiments, the interface presentation module 820 is further configured to: display the chat entry of the first object in the content interface or the message interface in response to the current user having a chat permission with the first object.

In some embodiments, the interface presentation module 820 is further configured to: display a chat entry for joining to the chat in the content interface and/or the message interface.

In some embodiments, the work content is first work content, and the interface presentation module 820 is further configured to: display, in the content interface and/or the message interface, a sharing entry for posting second work content associated with the current user.

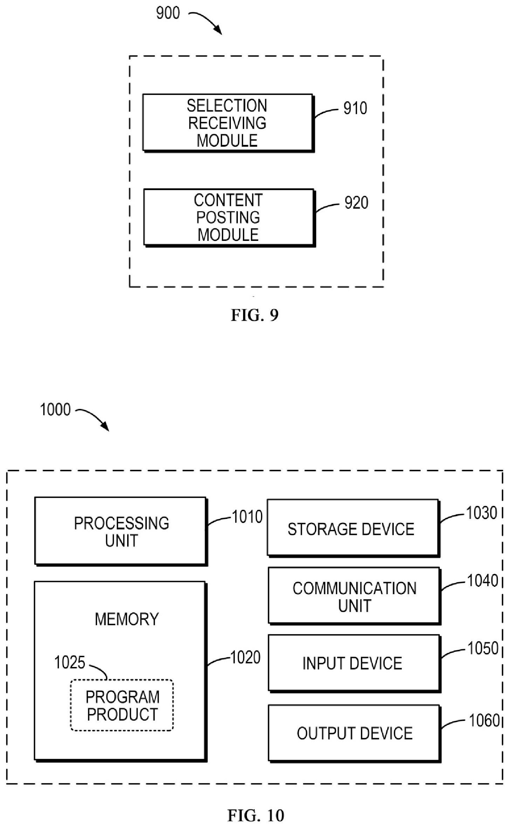

The embodiments of the disclosure further provide a corresponding apparatus for implementing the above method or process. FIG. 9 is a schematic structural block diagram of an apparatus 900 for sharing content according to some embodiments of the disclosure. The apparatus 900 may be implemented or included in the electronic device 110. The various modules/components in the apparatus 900 may be implemented by hardware, software, firmware, or any combination thereof.

As shown in FIG. 9, the apparatus 900 comprises: a selection receiving module 910 configured to receive a selection of a set of messages in a message presentation interface by a target user; and a content posting module 920 configured to post, based on a sharing request for the selected set of messages, work content generated based on the set of messages, causing the work content to be presented in a content interface associated with the target user.

In some embodiments, the message presentation interface comprises a chat interface for presenting a message in a chat, and the selection receiving module 910 is further configured to: present the chat interface, wherein the chat interface comprises a plurality of messages corresponding to a set of participants of the chat, the plurality of messages corresponds to at least one round of dialogue of the set of participants; and receive the selection of the set of messages from the plurality of messages by the target user.

In some embodiments, the selection receiving module 910 is further configured to: receive a selection of a target message from the plurality of messages by the target user; determine at least one message associated with the target message from the plurality of messages; and cause the at least one message to be automatically selected as a message in the set of messages.

In some embodiments, the selection receiving module 910 is further configured to: determine a target round dialogue corresponding to the target message; and determine a further message in the target round dialogue as at least one message associated with the target message from the plurality of messages.

In some embodiments, the selected set of messages is a time-continuous message of the plurality of messages.

In some embodiments, the apparatus 900 further comprising a download module configured to: based on a download request for the selected set of messages; and obtain a media file corresponding to the set of messages, wherein the media file comprises a picture file or a video file generated based on the set of messages.

FIG. 10 illustrates a block diagram of an electronic device 1000 in which one or more embodiments of the disclosure may be implemented. It should be understood that the electronic device 1000 illustrated in FIG. 10 is merely illustrative and should not constitute any limitation on the functionality and scope of the embodiments described herein. The electronic device 1000 shown in FIG. 10 may be configured to implement the electronic device 100 in FIG. 1.

As shown in FIG. 10, the electronic device 1000 is in the form of a general-purpose electronic device. The components of the electronic device 1000 may include, but are not limited to, one or more processors or processing units 1010, a memory 1020, a storage device 1030, one or more communication units 1040, one or more input devices 1050, and one or more output devices 1060. The processing unit 1010 may be an actual or virtual processor and capable of performing various processes according to programs stored in the memory 1020. In multiprocessor systems, the plurality of processing units execute computer-executable instructions in parallel to improve parallel processing capabilities of electronic device 1000.

The electronic device 1000 typically comprises a plurality of computer storage media. Such media may be any available media accessible to the electronic device 1000, including, but not limited to, volatile and non-volatile media, removable and non-removable media. The memory 1020 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 1030 may be a removable or non-removable medium and may include a machine-readable medium, such as a flash drive, magnetic disk, or any other medium, which may be capable of storing information and/or data and may be accessed within the electronic device 1000.

The electronic device 1000 may further comprise additional removable/non-removable, volatile/non-volatile storage media. Although not shown in FIG. 10, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 1020 may include a computer program product 1025 having one or more program modules configured to perform various methods or actions of various embodiments of the disclosure.

The communication unit 1040 may communicate with another electronic device through a communication medium. Additionally, the functionalities of components of the electronic device 1000 may be implemented in a single computing cluster or multiple computing machines capable of communicating over a communication connection. Thus, the electronic device 1000 may operate in a networked environment using logical connections with one or more other servers, network personal computers (PCs), or another network node.

The input device 1050 may be one or more input devices, such as a mouse, a keyboard, a trackball, or the like. The output device 1060 may be one or more output devices, such as a display, a speaker, a printer, or the like. The electronic device 1000 may also communicate with one or more external devices (not shown) through the communication unit 1040 as needed, wherein the external devices are such as storage devices, display devices, etc., communicate with one or more devices that enable a user to interact with the electronic device 1000, or communicate with any device (e.g., a network card, a modem, etc.) that enables the electronic device 1000 to communicate with one or more other electronic devices. Such communication may be performed via an input/output (I/O) interface (not shown).

According to example implementations of the disclosure, there is provided a computer-readable storage medium having computer-executable instructions stored thereon, wherein the computer-executable instructions are executed by a processor to implement the method described above. According to example implementations of the disclosure, a computer program product is further provided. The computer program product is tangibly stored on a non-transitory computer-readable medium and comprises computer-executable instructions, and the computer-executable instructions are executed by a processor to implement the method described above.

Aspects of the disclosure are described herein with reference to flowcharts and/or block diagrams of methods, apparatuses, devices, and computer program products implemented in accordance with the disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means for implementing the functions/acts specified in the flowchart and/or block diagram. These computer-readable program instructions may also be stored in a computer-readable storage medium. Those instructions cause the computer, programmable data processing apparatus, and/or other devices to operate in a particular manner, such that the computer-readable medium storing instructions includes an article of manufacture, which comprises instructions to implement aspects of the functions/acts specified in the flowchart and/or block diagram(s).

The computer-readable program instructions may be loaded onto a computer, other programmable data processing apparatus, or other devices. Therefore, a series of operational steps are performed on a computer, other programmable data processing apparatus, or other devices to produce a computer-implemented process, such that the instructions executed on a computer, other programmable data processing apparatus, or other devices implement the functions/acts specified in the flowchart and/or block diagram block or blocks.

The flowchart and block diagrams in the drawings show architecture, functionality, and operation of possible implementations of systems, methods, and computer program products according to various implementations of the disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the disclosure have been described above, which are illustrative, but not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for viewing content, comprising:
receiving a content viewing request; and
presenting a content interface associated with a target user, the content interface presenting work content generated based on a sharing request by the target user for a selected set of messages in a message presentation interface.

2. The method of claim 1, wherein the work content comprises a picture work generated based on the selected set of messages, the picture work comprising at least one picture.

3. The method of claim 2, wherein the picture work comprises a plurality of pictures, and the plurality of pictures correspond to different portions of the set of messages.

4. The method of claim 3, wherein the set of messages is split into a plurality of portions based on display information of a first terminal device associated with the target user for generating the plurality of pictures corresponding to the plurality of portions.

5. The method of claim 2, wherein the work content comprises a single picture for presenting a predetermined portion of the set of messages.

6. The method of claim 1, wherein the work content comprises a video work generated based on the selected set of messages, the video work is configured to present the set of messages in a predetermined order.

7. The method of claim 1, wherein the work content is presented through a message control in the content interface, the message control is configured to present different portions of the set of messages based on a received predetermined operation.

8. The method of claim 7, wherein the predetermined operation comprises a first sliding operation corresponding to a first interaction area in the content interface, the content interface further comprises a second interaction area, and a second sliding operation corresponding to the second interaction area is configured to switch work content presented in the content interface.

9. The method of claim 1, wherein the content interface further comprises a viewing entry, the method further comprises:
presenting, based on a selection of the viewing entry, a message interface for presenting the set of messages in a target style.

10. The method of claim 1 or claim 9, wherein the message presentation interface comprises a chat interface for presenting a message in a chat, the method further comprises:
displaying a chat entry of a first object in the content interface and/or the message interface, the first object being a participant of the chat.

11. The method of claim 10, wherein displaying the chat entry of the first object in the content interface and/or the message interface comprises:
displaying the chat entry of the first object in the content interface or the message interface in response to the current user having a chat permission with the first object.

12. The method of claim 10, further comprising:
displaying a chat entry for joining to the chat in the content interface and/or the message interface.

13. The method of claim 1 or claim 9, wherein the work content is first work content, and the method further comprises:
displaying, in the content interface and/or the message interface, a sharing entry for posting second work content associated with the current user.

14. A method for sharing content, comprising:
receiving a selection of a set of messages in a message presentation interface by a target user; and
posting, based on a sharing request for the selected set of messages, work content generated based on the set of messages, causing the work content to be presented in a content interface associated with the target user.

15. The method of claim 14, wherein the message presentation interface comprises a chat interface for presenting a message in a chat, and receiving the selection of the set of messages in the message presentation interface by the target user comprises:
presenting the chat interface, the chat interface comprising a plurality of messages corresponding to a set of participants of the chat, the plurality of messages corresponding to at least one round of dialogue of the set of participants; and
receiving the selection of the set of messages from the plurality of messages by the target user.

16. The method of claim 15, wherein receiving the selection of the set of messages from the plurality of messages by the target user comprises:
receiving a selection of a target message from the plurality of messages by the target user;
determining at least one message associated with the target message from the plurality of messages; and
causing the at least one message to be automatically selected as a message in the set of messages.

17. The method of claim 16, wherein determining at least one message associated with the target message from the plurality of messages comprises:
determining a target round dialogue corresponding to the target message; and
determining a further message in the target round dialogue as at least one message associated with the target message from the plurality of messages.

18. The method of claim 15, wherein the selected set of messages is a time-continuous message of the plurality of messages.

19. The method of claim 14, further comprising:
based on a download request for the selected set of messages; and
obtaining a media file corresponding to the set of messages, the media file comprising a picture file or a video file generated based on the set of messages.

20. The method of claim 14, wherein the sharing request indicates a theme of the set of messages and the work content displays the theme.

21. An apparatus for viewing content, comprising:
a request receiving module configured to receive a content viewing request; and
an interface presentation module configured to present a content interface associated with a target user, the content interface presenting work content generated based on a sharing request by the target user for a selected set of messages in a message presentation interface.

22. An apparatus for sharing content, comprising:
a selection receiving module configured to receive a selection of a set of messages in a message presentation interface by a target user; and
a content posting module configured to post, based on a sharing request for the selected set of messages, work content generated based on the set of messages, causing the work content to be presented in a content interface associated with the target user.

23. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 13 or claims 14 to 20.

24. A computer-readable storage medium having stored thereon a computer program executable by a processor to implement the method of any of claims 1 to 13 or claims 14 to 20.
